# EUROPÄISCHE PATENTSCHRIFT

(11) **EP 2 283 311 B1**
(45) Veröffentlichungstag und Bekanntmachung des Hinweises auf die Patenterteilung: **24.08.2011**
(21) Anmeldenummer: 09734467.5
(22) Anmeldetag: 17.04.2009
(51) Int. Cl.: G01B 21/04, G01B 5/008

(54) **MESSVERFAHREN FÜR EINE GLIEDERARM-KOORDINATENMESSMASCHINE**
MEASURING METHOD FOR AN ARTICULATED-ARM COORDINATE MEASURING MACHINE
PROCÉDÉ DE MESURE POUR UNE MACHINE DE MESURE DE COORDONNÉES À BRAS ARTICULÉ

(30) Priorität: 22.04.2008 EP 08103652
(43) Veröffentlichungstag der Anmeldung: 16.02.2011
(73) Patentinhaber: Leica Geosystems AG, 9435 Heerbrugg (CH)
(72) Erfinder: LIPPUNER, Heinz, CH-9445 Rebstein (CH); SIERCKS, Knut, CH-9402 Mörschwil (CH)
(74) Vertreter: Kaminski Harmann
(86) Internationale Anmeldenummer: PCT/EP2009/054607
(87) Internationale Veröffentlichungsnummer: WO 2009/130169

(56) Entgegenhaltungen:
- WO-A-98/08050

## Beschreibung

Die Erfindung betrifft ein Messverfahren für eine Koordinatenmessmaschine nach dem Oberbegriff des Anspruchs 1 und eine ebensolche Koordinatenmessmaschine nach dem Oberbegriff des Anspruchs 13 sowie ein Computerprogrammprodukt.

In vielen Anwendungsbereichen besteht das Bedürfnis, Messpunkte einer Oberfläche von Objekten und damit die Objekte selbst mit hoher Genauigkeit zu vermessen. Dies gilt insbesondere für die fertigende Industrie, für die das Vermessen und Überprüfen von Oberflächen von Werkstücken hohe Bedeutung hat.

Für diese Anwendungen existiert eine Reihe von Messgeräten, die für spezielle Aufgaben ausgelegt sind und meist als Koordinatenmessgeräte oder -maschinen bezeichnet werden. Diese Messgeräte vermessen die Oberfläche, indem ein mechanischer Kontakt mit dem zu vermessenden Messpunkt hergestellt wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Taster in Kontakt mit dem Messpunkt einer Oberfläche gebracht werden kann. Gattungsgemässe 3D-Koordinatenmess-Gelenkarme werden beispielsweise in US 5,402,582 oder EP 1 474 650 beschrieben. Vergleichbare Systeme, auch "Articulated Arm" oder "Portable CMM" genannt, werden z.B. von der Firma "Romer" als "Sigma", "Flex" oder "Omega" und der Firma "CimCore" als "Infinite" oder "Stinger" angeboten.

3D-Koordinatenmess-Gelenkarme besitzen eine in einem Referenzkoordinatensystem bekannt und fix positionierte Basis als ein Ende des Gelenkarms und ein gegenüberliegendes bewegliches Messende, an dem der Taster angeordnet ist. Als Standardtaster kann eine taktile Probe verwendet werden, welche beispielsweise aus einer Rubinkugel besteht, die auf einem Messstab montiert ist. Alternativ dazu sind als Tastelemente auch optische Sensoren bekannt, die beispielsweise als Punktmesser oder als Scanner, d.h. als eine Objektoberfläche kontinuierlich und z.B. linienweise abtastend, ausgeführt sein können. Im Speziellen können als solche optische Sensoren Triangulations-Sensoren verwendet werden. Des Weiteren wird beispielsweise in der Europäischen Patentanmeldung EP-A-2075096 die Verwendung einer Kamera als Tastelement beschrieben, die zum Aufnehmen bzw. Erfassen einer Messobjektoberfläche ausgebildet und am beweglichen Ende eines Gelenkarms montiert ist. Anhand der Gelenkarm-Koordinatenmessmaschine kann eine Position und Ausrichtung der Kamera im Raum hochpräzise bestimmt werden.

Zwischen den beiden Enden des Gelenkarms sind mehrere zueinander schwenkbar und/oder verdrehbar sowie gegebenenfalls gegeneinander verschiebbar verbundene Glieder oder Armabschnitte angeordnet, sodass das Messende mit dem Taster, das als Tast-Glied bezeichnet wird, innerhalb eines Raumabschnitts frei bewegbar ist. Dazu sind die Glieder des Arms mittels Dreh-, Kugel- und/oder Schwenkgelenken sowie gegebenenfalls mittels Aufhängungen, die eine Linearverschiebung ermöglichen, miteinander verbunden. Weiters sind den Gelenken bzw. Aufhängungen Lagemesseinrichtungen zugeordnet, sodass jeweils eine Stellung der Glieder zueinander, also eine relative Lage jeweils zwischen den Gliedern, gemessen werden kann. Beispielsweise werden dafür optisch-elektronische Winkelmesser und optisch-elektronische Längenmesser eingesetzt - sowie im Speziellen optisch-elektronische Lagemesser, die zur Bestimmung einer relativen Stellung von mittels eines Kugellagers verbundenen Gliedern ausgebildet sind.

Aus der Kenntnis einer momentanen Messstellung der Glieder, d.h. der jeweiligen relativen Lagen der Glieder zueinander sowie eines der Glieder zur Basis, kann die Position des Tasters - und somit die Position des durch den Taster kontaktierten Messpunktes - relativ zur Basis bestimmt und im Referenzkoordinatensystem angegeben werden. Das Bestimmen der Position erfolgt im Allgemeinen durch eine Auswerteeinheit, welche die durch die jeweiligen Lagemesseinrichtungen gemessen Messgrössen erfasst und daraus die Messpunkt-Position ableitet. Zum Beispiel können dafür speziell für diese Anwendung programmierte Computer oder Recheneinheiten verwendet werden.

Üblicherweise werden bei solchen Koordinatenmessmaschinen, insbesondere bei Gelenkarmsystemen, Messpunkte im Einzelmessungsverfahren bestimmt, wobei pro kontaktierten Messpunkt jeweils eine Messung der momentanen GliederStellung erfolgt.

Zwar können durch die Verwendung von hochpräzisen optischelektronischen Lagemesseinrichtungen bereits hohe Genauigkeiten beim Bestimmen der Koordinaten eins Messpunktes erreicht werden, jedoch erfordern viele Anwendungsbereiche eine noch höhere Genauigkeit und insbesondere höhere Zuverlässigkeit für die Positionsbestimmung.

Beispielsweise kann die Reibung in den Gelenken zu einer Durchbiegung der Verbindungselemente und somit zu einem Messfehler führen. Des Weiteren kann durch Reibung in den Lagern der Gelenke auch der so genannte Slip-Stick-Effekt auftreten, wodurch ebenso Messfehler entstehen können. Als Slip-Stick-Effekt wird dabei das Ruckgleiten von gegeneinander bewegten Festkörpern bezeichnet, wobei jeweils eine Bewegungsfolge aus Haften, Verspannen, Trennen und Abgleiten ausgeführt wird.

Aus der Veröffentlichungsschrift WO 98/08050 ist eine Gelenkarm-Koordinatenmessmaschine bekannt, die Schock-Detektoren und/oder Temperatursensoren zur Minimierung oder Kompensation von Messfehler aufweist. Zusätzlich werden die von den Winkelsensoren abgegebenen Signale gemittelt, um vibrations bedingte Messfehler gering zu halten. Ein weiteres bekanntes Verfahren zur Erhöhung der Genauigkeit und der Zuverlässigkeit von Punktmessungen durch Koordinatenmessmaschinen sieht vor, den zu vermessenden Punkt einer Oberfläche nicht nur einmal zu kontaktieren, sondern durch ein Absetzen und erneutes Anlegen des Tasters an den Messpunkt, d.h. durch einen neuen entkoppelten Messvorgang für denselben Messpunkt, eine zweite und gegebenenfalls dritte Kontrollmessung durchzuführen. Dieses Verfahren erlaubt es, grobe Messfehler einer Punktmessung zu erkennen, beispielsweise durch ein Vergleichen von für ein und denselben Messpunkt - anhand separat durchgeführter Messvorgänge - bestimmten Messpunkt-Positionen. Als nachteilig erweist sich dabei allerdings der verhältnismässig grosse Aufwand für das Durchführen einer Kontrollmessung. Ebenso besteht die Gefahr, dass bei einer Kontrollmessung der Taster nicht an exakt demselben Messpunkt anliegt und somit eine ursprünglich genaue, erste Messung durch das Ergebnis der Kontrollmessung verfälscht wird und zu einer ungenauen Positionsbestimmung führt.

Des Weiteren stellt sich heraus, dass durch ein Durchführen von einer oder zwei Kontrollmessungen die Genauigkeit für die Positionsbestimmung eines Messpunktes - gegenüber dem Durchführen von nur einer einzigen Messung - gar nicht oder nur in geringem Ausmass verbessert werden kann.

Eine Aufgabe der Erfindung ist daher das Bereitstellen eines verbesserten Messverfahrens zur Positionsbestimmung eines Messpunktes anhand einer Koordinatenmessmaschine, insbesondere hinsichtlich der dabei erzielbaren Genauigkeit und Zuverlässigkeit. Im Speziellen soll das Messverfahren zusätzlich einfach handhabbar sein.

Eine weitere Aufgabe der Erfindung ist das Bereitstellen einer verbesserten Koordinatenmessmaschine. Insbesondere soll die Koordinatenmessmaschine unter geringem hardwaremodifikationsseitigem Aufwand eine genauere und zuverlässigere und dabei einfach handhabbare Positionsbestimmung eines Messpunktes ermöglichen. Im Speziellen soll das Verhältnis Gesamtgenauigkeit für die Positionsbestimmung zu den jeweiligen erreichbaren Genauigkeiten der einzelnen Lagemesseinrichtungen der Koordinatenmessmaschine verbessert werden.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe Messverfahren zur Positionsbestimmung eines Messpunktes anhand einer Koordinatenmessmaschine löst sich von der bei Verfahren des Standes der Technik notwendigen Bedingung, dass für einen Messvorgang genau eine Messung der aktuellen Stellung der Glieder der Koordinatenmessmaschine erfolgt. Hingegen werden gemäss der Erfindung eine Mehrzahl und insbesondere eine Vielzahl von Messungen zur Bestimmung der Position eines Messpunktes aufgenommen. Aus den mehreren Messungen, wobei es sich insbesondere um eine Anzahl von mindestens etwa 10, im Speziellen mindestens etwa 100 oder mindestens etwa 1000, Messungen in unterschiedlichen Messstellungen der Glieder handelt, kann mittels statistischer Auswertungsmethoden die gesuchte Position des Messpunktes mit signifikant verbesserter Genauigkeit und Zuverlässigkeit bestimmt werden.

Dazu wird das Tastelement der Koordinatenmaschine in eine Messposition gebracht, z.B. in Kontakt mit dem zu vermessenden Punkt einer Objektoberfläche. In dieser Messposition wird das Tastelement - oder insbesondere das das Tastelement aufweisende Tast-Glied - festgehalten, sodass die Messposition über einen gewissen Zeitraum hinweg aufrechterhalten bleibt. In diesem ortsfixierten Zustand des Tastelements bzw. des Tast-Glieds werden erfindungsgemäss mehrere unterschiedliche Messstellungen der Glieder erzeugt. Dabei wird unter einer unterschiedlichen Messstellung eine veränderte relative Lage von mindestens zwei der Glieder im Raum - d.h. relativ zu einer fixen, in einem Referenzkoordinatensystem bekannt positionierten Basis der Koordinatenmessmaschine - verstanden.

Die unterschiedlichen Messstellungen werden dabei anhand von Lagemesseinrichtungen, welche jeweils die relativen Lagen der Glieder zueinander messen, erfasst. Dies erfolgt durch eine Aufnahme von mindestens einem Messgrössensatz jeweils für eine Messstellung, sodass eine Mehrzahl von Messgrössensätzen gespeichert wird. Ein Messgrössensatz besteht dabei jeweils aus für eine Messstellung gemessenen Messgrössen, die durch die Lagemesseinrichtungen bestimmt werden. Beispielsweise werden in bekannter Weise als Messgrössen Schwenk- oder Drehwinkel sowie gegebenenfalls Längen zwischen den Gliedern durch Winkel- oder Längenmesser als Lagemesseinrichtungen gemessen.

Durch das erfindungsgemässe Erzeugen von insbesondere einer grossen Anzahl von unterschiedlichen Stellungen der Glieder zueinander, wobei das Tastelement in der Messposition festgehalten wird, können entsprechend viele Messgrössensätze zur Positionsbestimmung des einen einzigen Messpunkts aufgenommen werden. Sämtliche der Messgrössensätze beschreiben dabei dieselbe Position. Idealerweise sollte also - rein theoretisch - bei einer separaten Auswertung jedes einzelnen Messgrössensatzes stets die exakt gleiche Position abgeleitet werden, wobei die Messgrössensätze sozusagen lediglich jeweils unterschiedliche Wege von der Basis zu dem einen Messpunkt beschreiben. Unter Anderem aufgrund der jedoch in der Praxis vorhandenen Messungenauigkeiten der einzelnen Lagemesseinrichtungen sowie der eingangs beschriebenen durch Reibung in den Lagern der Gelenke hervorgerufenen Messfehler - z.B. durch den Slip-Stick-Effekt - weichen die für unterschiedliche Relativstellungen der Glieder erfassten Messungen jeweils geringfügig voneinander ab. Da bei einer Vielzahl von Messungen sich nun die geringen Messfehler - statistisch betrachtet - im Idealfall jeweils gegenseitig ausgleichen, kann erfindungsgemäss die Position mit erheblich gesteigerter Genauigkeit gegenüber einer einzigen Messung errechnet werden. Dazu werden die erfassten Messgrössensätze bevorzugt anhand einer Ausgleichsrechnung statistisch ausgewertet und daraus die gesuchte Position des Messpunktes abgeleitet.

Für das Erzeugen der unterschiedlichen Messstellungen kann dabei ein wiederholtes oder fortschreitend über einen gewissen Zeitraum hinweg erfolgendes Ändern der Stellungen der Glieder erfolgen, wofür jegliche Art von Auslenkung mindestens eines der Glieder aus dessen aktueller räumlicher Lage ausgeführt werden kann.

Beispielsweise kann dazu eine Kraft auf eines der Glieder ausgeübt werden, sodass die relative Lage der Glieder zueinander verändert wird. In einem einfachen Fall genügt dazu eine einzige, beispielsweise lineare oder kreisförmige Bewegung des Glieds oder aber eine wiederholte, rüttelnde oder zitternde Bewegung des Glieds. Die Bewegung des Gliedes im Raum kann dabei im Mikrometer- oder Millimeterbereich, jedoch auch im Bereich von mehreren Zenti- oder Dezimetern ausgeführt werden. Durch das Versetzen eines der Glieder im ortsfixierten Zustand des Tasters werden gleichzeitig mehrere Glieder gegeneinander bewegt. Rein beispielhaft können bei einem fortlaufenden Bewegen eines der Glieder über einen Zeitraum von z.B. wenigen Zehntelsekunden oder einigen Sekunden hinweg und einer Messstellungs-Erfassungsrate von beispielsweise 100Hz bereits eine Anzahl von mehreren 10 bzw. 100 Messgrössensätzen für eine Positionsbestimmung aufgenommen werden. Dabei ist allerdings zu beachten, dass die Messgrössen der einzelnen Lagemesseinrichtungen jeweils gleichzeitig - oder zumindest näherungsweise gleichzeitig - für jeweils gleiche aktuelle Messstellungen erfasst werden. Das Bewegen eines oder mehrerer der Glieder kann dabei händisch durch einen Benutzer erfolgen, jedoch auch maschinell beispielsweise mittels einer an einem oder mehreren der Glieder angreifenden elektrischen Antriebs- oder Vibrationserzeugungseinheit. In speziellen Anwendungsfällen kann auch ein Tremor der Hand des Benutzers beim Halten eines der Glieder - beispielsweise auch des Tast-Glieds beim Kontaktieren des Messpunktes - zur Erzeugung der unterschiedlichen Messstellungen genügen.

Rein theoretisch erweist es sich dabei zur Ausgleichung der durch den Slip-Stick-Effekt und durch Durchbiegungen der Verbindungselemente hervorgerufenen Messfehler als vorteilhaft, bei der Erzeugung der unterschiedlichen Messstellungen viele Bewegungsumkehrungen auszuführen, insbesondere sodass die zum Bewegen der Arm-Glieder ausgeübten Kräfte in der mechanischen Struktur statistisch möglichst gleichverteilt in alle Raumrichtungen wirken. So erlaubt eine derartige mechanische Bewegung der Glieder eine verhältnismässig gute Mittelung der durch Reibung und Durchbiegung verursachten Fehler.

Zusammengefasst wird erfindungsgemäss nun bei geringem Aufwand für den Messvorgang ein Aufnehmen von einer Vielzahl von Messungen für das Bestimmen einer einzigen Messposition ermöglicht. Dadurch kann die Messposition erheblich zuverlässiger und genauer bestimmt werden. Ein Absetzen des Tastelements aus der Messposition und erneutes Rückführen desselben in die Messposition ist dabei nicht erforderlich und würde aufgrund des dafür notwendigen Zeitaufwands ohnehin nicht das erfindungsgemässe Erfassen der Vielzahl von Messungen erlauben.

Für das statistische Auswerten der Messgrössensätze können sämtliche bekannte statistische Verfahren zur Anwendung kommen, wie beispielsweise ein optimierendes statistisches Schätzverfahren, insbesondere eine Ausgleichsrechnung nach der Methode der kleinsten Quadrate. Ebenso kann zusätzlich eine statistische Modellierung zur rechnerischen Kompensation von bekannten systematischen Fehlern erfolgen.

Vorrichtungsseitig weist die erfindungsgemässe Koordinatenmessmaschine zur Positionsbestimmung eines Messpunktes eine Basis und mehrere relativ zur Basis und relativ gegeneinander bewegliche Glieder auf, wobei eines der Glieder als Tast-Glied ein Tastelement aufweist. Innerhalb eines vorgegebenen Raumvolumens kann dabei das Tastelement frei bewegt werden und in eine gewünschte Messposition gebracht werden. Das Tastelement ist dabei insbesondere zum berührenden Kontaktieren eines Messpunktes ausgebildet, wobei dieser im den Messpunkt kontaktierenden Zustand die Messposition - oder anders ausgedrückt eine Tastposition - einnimmt. Des Weiteren sind mehrere Lagemesseinrichtungen zum Messen von Messgrössen, die von einer Messstellung der Glieder zueinander abhängen, vorhanden. Dabei ist eine aktuelle Messstellung durch eine aktuelle relative Lage der Glieder zueinander sowie mindestens eines der Glieder zur Basis gegeben.

Die Messpositionsbestimmung erfolgt durch eine Auswerteeinheit, die gemäss der Erfindung ausgebildet ist zur Erfassung von mehreren Messgrössensätzen für unterschiedliche Messstellungen in einer einzigen festgehaltenen Messposition sowie zur Ableitung dieser Position anhand einer statistischen Auswertung der aufgenommenen Messgrössensätze.

Insbesondere ist die Auswerteeinheit somit zur Durchführung der Schritte:
- wiederholt erfolgendes Erfassen eines Messgrössensatzes jeweils für die unterschiedlichen Messstellungen sowie
- Bestimmen der Messposition anhand einer statistischen Auswertung der aufgenommenen Messgrössensätze
im Rahmen des erfindungsgemässen Messverfahrens ausgebildet.

In einer speziellen Ausführungsform weist die Koordinatenmessmaschine eine Dynamisierungs-Komponente zur aktiven Erzeugung der mehreren unterschiedlichen Messstellungen auf. Insbesondere ist mittels der Dynamisierungs-Komponente eine an mindestens einem der Glieder angreifende, insbesondere variierende Kraft ausübbar. Beispielsweise kann die Dynamisierungs-Komponente an einem oder mehreren der Glieder angeordnet und als elektrisch betriebene Antriebseinheit, insbesondere als elektrische Vibrationserzeugungseinheit, und somit selbst zur Ausübung der Kraft ausgebildet sein. Im Speziellen kann die Antriebseinheit automatisch ausgeschaltet werden, sobald eine vorgegebene statistische Mindestgenauigkeit für die Positionsbestimmung erreicht ist. Beispielsweise ist auch ein Anbringen einer Vibrationserzeugungseinheit an jedem der Glieder, insbesondere ausser dem Tast-Glied, möglich, sodass in eingeschaltetem Zustand jedes der Glieder bewegt wird und fortschreitend die Gliederstellung sämtlicher dieser Glieder variiert wird.

Alternativ kann die Dynamisierungs-Komponente allerdings auch als an einem der Glieder angeordneter Griff ausgebildet sein, sodass die mehreren Messstellungen z.B. durch eine händische Bewegung durch den Benutzer erzeugt werden können. Zur einfacheren Fixierung des Tastelements in der Messposition kann dabei ebenso am Tast-Glied ein Griff zum Festhalten bzw. Aufrechterhalten dieser Position durch einen Benutzer angeordnet sein. Zusätzlich oder alternativ kann zum Ortsfixieren des Tast-Glieds im Raum auch eine Fixier-Komponente zum Festklemmen - insbesondere anhand eines Klemmmechanismus - des Tast-Glieds an einem relativ zur Basis fix positionierten Gegenstand vorhanden sein.

Als die Lagemesseinrichtungen, die den jeweiligen schwenk-, dreh- oder verschiebbaren Verbindungen zwischen den Gliedern zugeordnet sind, können zum Beispiel optischelektronische Winkelmesser bzw. optisch-elektronische Längenmesser zu Einsatz kommen.

Beispielsweise kann die Koordinatenmessmaschine als Gelenkarm ausgebildet sein und mindestens drei Arm-Gliedern als Glieder aufweisen, die teilweise über relative Drehbewegungen ermöglichende Gelenke und teilweise über relative Linearbewegungen ermöglichende Aufhängungen miteinander verbunden sind.

Die Erfindung betrifft des Weiteren ein Computerprogrammprodukt mit Programmcode, der auf einem maschinenlesbaren Träger gespeichert ist. Dabei ist das Computerprogrammprodukt zur Durchführung der Schritte:
- erneutes Erfassen eines Messgrössensatzes jeweils für unterschiedlichen Messstellungen sowie
- Bestimmen der Messposition anhand einer statistischen Auswertung der aufgenommenen Messgrössensätze
des erfindungsgemässen Messverfahrens geeignet, insbesondere wenn das Programm in der Auswerteeinheit der Koordinatenmessmaschine ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine erfindungsgemässe, als Gelenkarm ausgeführte Koordinatenmessmaschine;
- Fig.2: eine schematische Darstellung des erfindungsgemässen Messverfahrens;
- Fig.3: eine Darstellung von mehreren Messstellungen der Koordinatenmessmaschine mit ortsfixiertem Taster in Mess- bzw. Tastposition;
- Fig.4: ein Referenzkoordinatensystem mit darin eingetragenen, für die vielen Messstellungen errechneten Positionen;
- Fig.5: die Koordinatenmessmaschine mit einem Fixier- Griff und einem Dynamisierungs-Griff; und
- Fig.6: die Koordinatenmessmaschine mit einem Fixier- Griff und einem elektrischen Vibrator als Dynamisierungs-Komponente; und
- Fig.7: die Koordinatenmessmaschine mit einer Fixier- Komponente.

In den Figurenbeispielen ist als Tastelement jeweils ein taktiler Taster, wie z.B. eine Rubinkugel, gezeigt. Dabei ist der Taster zum berührungserzeugenden Kontaktieren eines Messpunktes von einer Messobjektoberfläche ausgebildet. Wird der Taster in Kontakt mit dem zu vermessenden Messpunkt gebracht, d.h. wird der Taster zum Messpunkt hingeführt, sodass dieser den Messpunkt berührt, so nimmt der Taster die Messposition bzw. Tastposition ein. Alternativ können erfindungsgemäss jedoch auch weitere aus dem Stand der Technik bekannte Tastelemente anstelle des durchgängig in den Figuren gezeigten taktilen Tasters verwendet werden. So können als Tastelement beispielsweise optische Sensoren, insbesondere ein optischer Distanzmesser zum optischen Kontaktieren des zu vermessenden Messpunkts einer Messobjektoberfläche, ein Laserscanner zum Abtasten der Messobjektoberfläche oder eine Kamera vorgesehen sein.

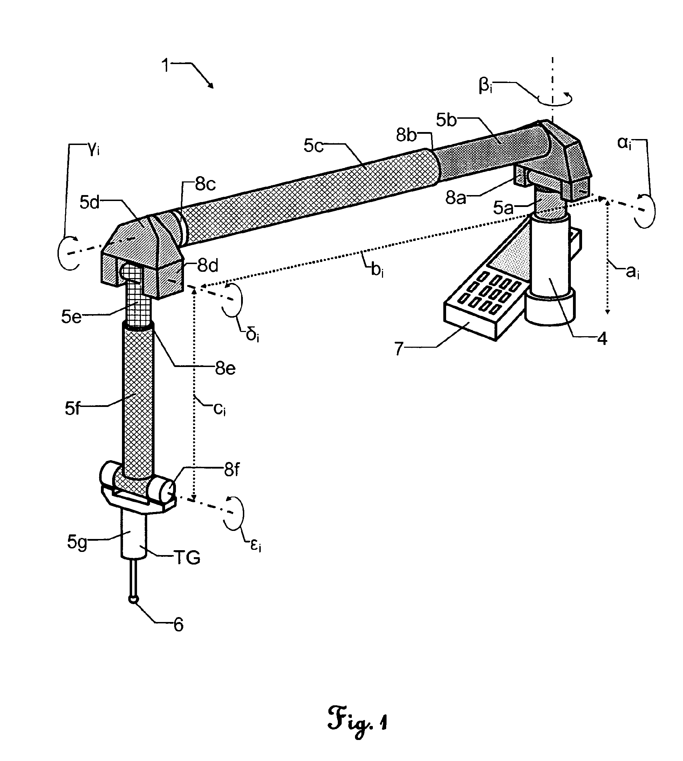

Figur 1 zeigt eine erfindungsgemässe Koordinatenmessmaschine 1 zur Positionsbestimmung eines Messpunktes. Die Koordinatenmessmaschine 1 ist dabei als Gelenkarm ausgebildet und weist eine - in einem Referenzkoordinatensystem fix und bekannt positionierte - Basis 4 auf. Von der Basis ausgehend sind nacheinander beispielhaft sieben Arm-Glieder 5a-5g über relative Drehbewegungen ermöglichende Gelenke und/oder über relative Linearbewegungen ermöglichende Aufhängungen miteinander verbunden. Aus Darstellungsgründen, d.h. zur verständlicheren Darstellung, sind diese Gelenke und Aufhängungen in Figur 1 nicht explizit sichtbar gezeigt, wobei gattungsgemässe Gelenke und Aufhängungen dem Fachmann ohnehin hinlänglich bekannt sind.

Ein erstes der Glieder 5a ist dabei relativ zur Basis 4 beweglich an dieser befestigt, ein zweites der Glieder 5b ist am ersten Glied 5a relativ zu diesem beweglich befestigt, usw. Das siebte Glied 5g weist einen Taster 6 auf und bildet das Tast-Glied TG. Der Taster 6 ist somit innerhalb eines Raumabschnitts frei bewegbar und kann in Kontakt mit einem zu vermessenden Punkt einer Objektoberfläche gebracht werden. Beispielsweise ist der Taster 6 als Rubinkugel ausgebildet, wobei im Rahmen der Erfindung der Taster 6 allgemein als der zum Kontaktieren des Messpunktes vorgesehene Teil des Tast-Glieds TG und als punktförmig betrachtet wird. Kontaktiert der Taster 6 den Messpunkt, so befindet sich der Taster 6 in der Tastposition.

Die Glieder 5a-5f sind dabei zur einfacheren Unterscheidung in Figur 1 jeweils abwechselnd unterschiedlich schraffiert dargestellt. Das Tast-Glied TG ist ohne Schraffur gezeigt.

Jeweils den Gelenken bzw. Aufhängungen zugeordnet sind mehrere Lagemesseinrichtungen 8a-8f zum Messen von Stellungen jeweils der Glieder 5a-5f zueinander vorhanden. Beispielsweise sind als die Lagemesseinrichtungen 8a-8f optisch-elektronische Winkelmesser 8a,8c,8d sowie optisch-elektronische Längenmesser 8b,8e vorgesehen, die zum Messen von mit der relativen Lage der Glieder verknüpften Messgrössen αᵢ,βᵢ,γᵢ,δᵢ,εᵢ,aᵢ,bᵢ,cᵢ ausgebildet sind. Als Messgrössen αᵢ,βᵢ,γᵢ,δᵢ,εᵢ,aᵢ,bᵢ,cᵢ werden somit also jeweils Winkelauslenkungen αᵢ,βᵢ,γᵢ,δᵢ,εᵢ, und Längenauslenkungen aᵢ, bᵢ, cᵢ zwischen den Gliedern 5a-5f gemessen.

Gemäss der Erfindung ist die Auswerteeinheit 7 zur - im Rahmen eines einzigen Messvorgangs erfolgenden - Erfassung von mehreren Messgrössensätzen für unterschiedliche Messstellungen in einer festgehaltenen Tastposition des Tasters 6 ausgebildet. Insbesondere erfolgt das Erfassen von Messgrössensätzen dabei fortschreitend über einen gewissen Messzeitraum hinweg mit einer bestimmten Erfassungsrate, die beispielsweise etwa zehn Hertz bis zu etwa einigen hundert Kilohertz betragen kann, während zur gleichen Zeit in festgehaltenem Zustand des Tasters 6 in der Tastposition die Messstellung der Glieder 5a-5f fortlaufenden geändert werden. Alternativ können auch jeweils zu schnell aufeinander folgenden, jedoch zufällig gewählten Zeitpunkten während eines fortlaufenden Änderns der Messstellung Messgrössensätze aufgenommen werden.

Aus der Mehrzahl der aufgenommenen Messgrössensätze wird entweder anschliessend an das Erfassen der Messgrössensätze oder bereits währenddessen - und somit kontinuierlich aktualisierend - durch die Auswerteeinheit die Position des durch den Taster 6 kontaktierten Messpunktes anhand einer statistischen Auswertung der aufgenommenen Messgrössensätze errechnet.

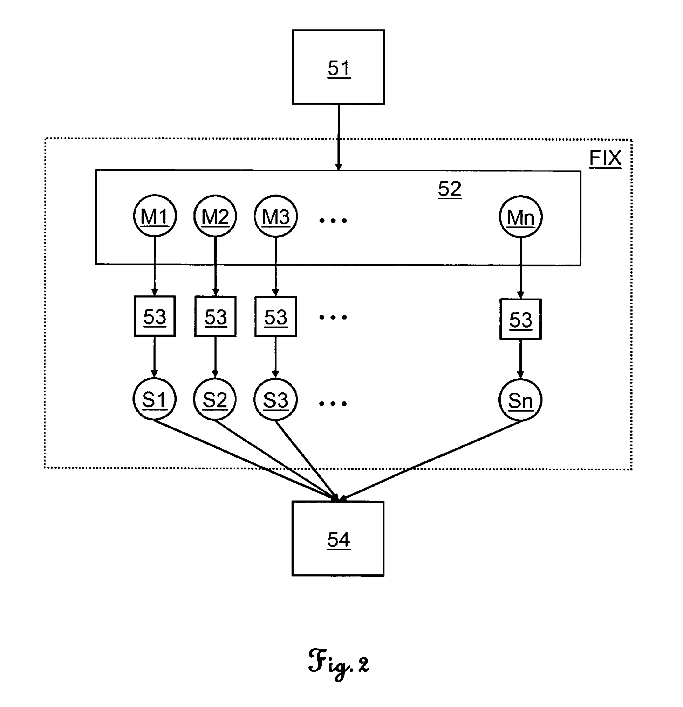

In Figur 2 ist das erfindungsgemässe Verfahren schematisch dargestellt. Im Rahmen des Verfahrens erfolgt dabei ein Kontaktieren 51 des Messpunktes durch den Taster, sodass dieser eine Tastposition einnimmt.

Diese Tastposition wird während der Messung aufrechterhalten, d.h. es erfolgt sozusagen ein räumliches Fixieren FIX des Tasters, wobei dies nicht notwendigerweise als separater Schritt auszuführen ist, sondern durch ein Innehalten des Tasters in der Tastposition implizit erfolgen kann. In diesem ortsfixierten Zustand FIX des Tasters in der Tastposition werden nun erfindungsgemäss mehrere unterschiedliche Messstellungen M1,M2,M3,...,Mi,...,Mn erzeugt 52. Dabei erfolgt jeweils für die unterschiedlichen Messstellungen M1,M2,M3,...,Mi,...,Mn ein Erfassen 53 eines Messgrössensatzes S1,S2,S3,...,Si,...,Sn durch Messen von mit der jeweiligen Messstellung M1,M2,M3,...,Mi,...,Mn der Glieder verknüpften Messgrössen. Somit wird also für jede Messstellung M1,M2,M3,...,Mi,...,Mn mindestens ein Messgrössensatz S1,S2,S3,...,Si,...,Sn aufgenommen.

Ein Messgrössensatz Si(αᵢ,βᵢ,γᵢ,δᵢ,εᵢ,aᵢ,bᵢ,cᵢ) kann dabei beispielsweise in Vektorform sämtliche für eine Messstellung Mi der Glieder gemessenen Messgrössen αᵢ,βᵢ,γᵢ, δᵢ,εᵢ,aᵢ,bᵢ,cᵢ enthalten.

Das Bestimmen 54 der Position des Messpunktes relativ zur Basis erfolgt dann anhand einer statistischen Auswertung der aufgenommenen Messgrössensätze S1,S2,S3,...,Si,...,Sn.

In einer speziellen Variante des Verfahrens kann - zusätzlich zur Positionsbestimmung - ein statistisches Ableiten eines Genauigkeitswerts für das Bestimmen der Messpunktposition erfolgen. Entsprechende statistische Rechenverfahren, die sich zur Schätzung einer Genauigkeit für eine aus vielen Einzelmessungen berechnete Position eignen, sind bekannt.

In einer weiteren speziellen Ausführungsvariante des Messverfahrens kann ein Mess-Zeitraum - währenddessen das Erfassen von Messgrössensätzen S1,S2,S3,...,Si,...,Sn insbesondere fortlaufend mit einer bestimmten Frequenz erfolgt sowie z.B. durch eine langsame, kontinuierliche Bewegung eines der Glieder fortlaufend die Messstellung M1,M2, M3,...,Mi,...,Mn verändert wird - so gewählt werden, dass eine vorgegebene statistisch berechnete Mindestgenauigkeit für das Bestimmen der Messpunktposition erreicht wird. Beispielsweise kann dazu nach Erreichen der Mindestgenauigkeit ein Mess-Stop-Signal optisch, akustisch und/oder taktil angezeigt werden.

Alternativ kann der Mess-Zeitraum auch derart gewählt werden, dass eine vordefinierte oder eine von einer gewünschten Mindestgenauigkeit abhängigen Anzahl an unterschiedlichen Messstellungen M1,M2,M3,...,Mi,...,Mn erzeugt wird. Auch bei dieser Variante kann nach Erreichen der bestimmten Anzahl ein Mess-Stop-Signal optisch, akustisch und/oder taktil angezeigt werden.

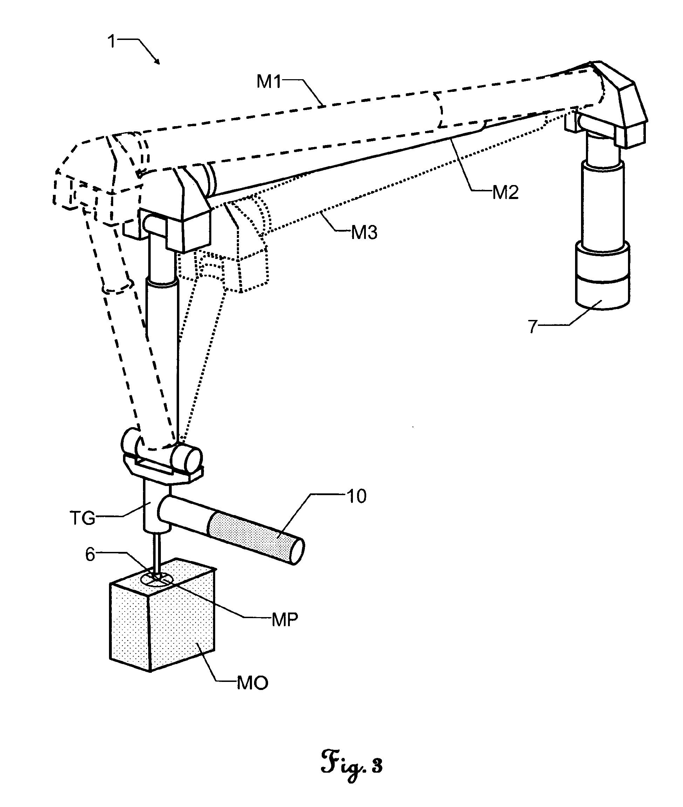

Figur 3 zeigt die erfindungsgemässe Koordinatenmessmaschine 1 mit Taster 6, der sich in Tastposition befindet. Das bedeutet, dass der Taster 6 den zu vermessenden Messpunkt MP der Oberfläche des Messobjekts MO kontaktiert, also mechanisch berührt. Gemäss der Erfindung wird während des Messvorgangs zur Positionsbestimmung des einen Messpunkts MP die Tastposition aufrechterhalten und dabei in mehreren Messstellungen M1,M2,M3 - was durch die Darstellung der Armglieder jeweils in durchgezogenen, gestrichelten und gepunkteten Linien veranschaulicht wird - die entsprechenden Messgrössen aufgenommen. Zur Positionsbestimmung werden die für die jeweiligen Messstellungen M1,M2,M3 erfassten Messgrössen durch die Auswerteeinheit 7 statistisch ausgeglichen und daraus die gesuchte Messpunktposition errechnet.

In einer ersten Ausführungsvariante kann die Auswerteeinheit 7 dabei als zentrale Auswerteeinheit ausgeführt sein. Die den Gelenken zugeordneten Lagemesseinrichtungen und die Auswerteeinheit 7 können dann derart zur bidirektionalen Kommunikation miteinander über Kabel oder kabellos, insbesondere per Funk oder optisch, ausgebildet sein, sodass die jeweils durch die Lagemesseinrichtungen gemessenen Messgrössen an die zentrale Auswerteeinheit sowie durch die zentrale Auswerteeinheit Signale zur Synchronisierung von Messgrössenaufnahme und Messgrössenverarbeitung an die jeweiligen Lagemesseinrichtungen übermittelt werden können.

In einer zweiten Ausführungsvariante weist die Auswerteeinheit 7 jeweils dezentrale, den Lagemesseinrichtungen zugeordnete Auswerte-Teileinheiten - die insbesondere jeweils in die Lagemesseinrichtungen integriert sein können - und eine zentrale Auswertekomponente auf. Dabei sind die jeweiligen Auswerte-Teileinheiten zur fortlaufenden und insbesondere automatischen Erfassung von einer Vielzahl der jeweiligen Messgrössen für die erfindungsgemäss erzeugten unterschiedlichen Messstellungen im Rahmen einer Positionsbestimmung ausgebildet, sodass direkt durch die Auswerte-Teileinheiten eine statistische Auswertung der für die unterschiedlichen Messstellungen gemessenen jeweiligen Messgrössen erfolgen kann

Die bereits durchgeführten Auswertungen der jeweiligen Auswerte-Teileinheiten werden an die zentrale Auswertekomponente übermittelt, woraus die zentrale Auswertekomponente die Messposition ableiten kann.

Zum Fixieren des Tasters 6 im den Messpunkt MP kontaktierenden Zustand ist am letzten, den Taster 6 aufweisenden Glied, nämlich dem Tast-Glied TG, ein Griff 10 montiert, sodass einem Benutzer das über den Mess-Zeitraum hinweg erforderliche Aufrechterhalten der Tastposition erleichtert wird. Insbesondere genügt es dabei, wenn der Taster 6 während der Messung den Kontakt mit dem Messpunkt MP nicht verliert. Dabei muss das Tast-Glied TG selbst nicht notwendigerweise ebenso im Raum ortsfixiert werden. Beispielsweise kann es sich sogar als vorteilhaft erweisen, wenn auch die Stellung des Tast-Glieds TG variiert wird, z.B. indem dasselbe - den Messpunkt MP weiter berührend - um den Messpunkt MP geschwenkt oder gedreht wird. Alternativ kann jedoch auch die Lage des Tast-Glieds TG im Raum aufrechterhalten werden, sodass die Tastposition für einen Benutzer einfach und zuverlässig festgehalten werden kann.

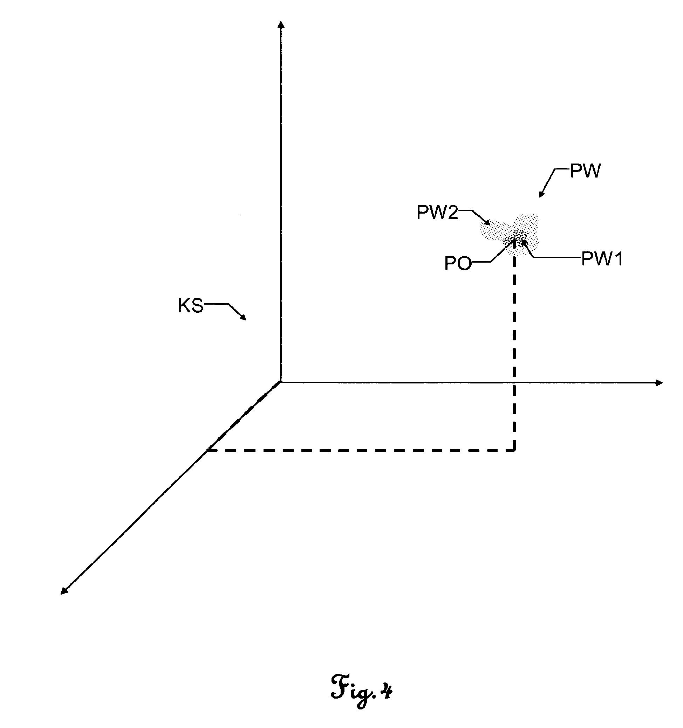

In Figur 4 ist ein Referenzkoordinatensystem KS mit darin eingetragenen, für die vielen Messstellungen jeweils separat errechneten Positionen gezeigt.

Aufgrund geringfügiger, gerätebedingter Messungenauigkeiten der Lagemesseinrichtungen sowie gegebenenfalls aufgrund von durch die Lagemesseinrichtungen nicht berücksichtigten Gliedermaterialverformungen, die jeweils in unterschiedlichen Messstellungen verschieden stark ausgeprägt sein können, entstehen geringfügige Abweichungen zwischen den bei einer separaten Auswertung der unterschiedlichen Messgrössensätze errechneten Messpunkt-positionen. Werden die für die unterschiedlichen Messstellungen errechneten Positionen, die eigentlich alle - mit unterschiedlichen Abweichungen - die eine Position PO des durch den Taster kontaktierten Messpunkts darstellen, in einem Referenzkoordinatensystem KS eingetragen, so erhält man eine Punktwolke PW um die tatsächliche, genaue Position PO des Messpunkts. Da die für die unterschiedlichen Messstellungen errechneten Positionen eine statistische Verteilung im Raum aufweisen, die etwa durch die Gaussverteilung beschrieben werden kann, weist die Punktwolke PW in der nahen Umgebung PW1 um die wahrscheinlichste tatsächliche Messpunktposition PO eine höhere Punktdichte auf als an Randbereichen PW2 der Punktwolke PW. Zur Bestimmung einer exakten Näherung für die tatsächliche Messpunktposition PO kann beispielsweise ein Raummittelpunkt der Punktwolke PW oder alternativ ein Schwerpunkt der Punktwolke PW errechnet werden. Dabei können grundsätzlich sämtliche bekannte statistische Ausgleichsmethoden zur Anwendung kommen. Insbesondere können auch die einzelnen in unterschiedlichen Messstellungen erfassten Messgrössen der jeweiligen Lagemesseinrichtungen gemittelt werden, sodass aus diesen gemittelten relativen Lagen der einzelnen Glieder zueinander die Messpunkt-Position PO abgeleitet werden kann.

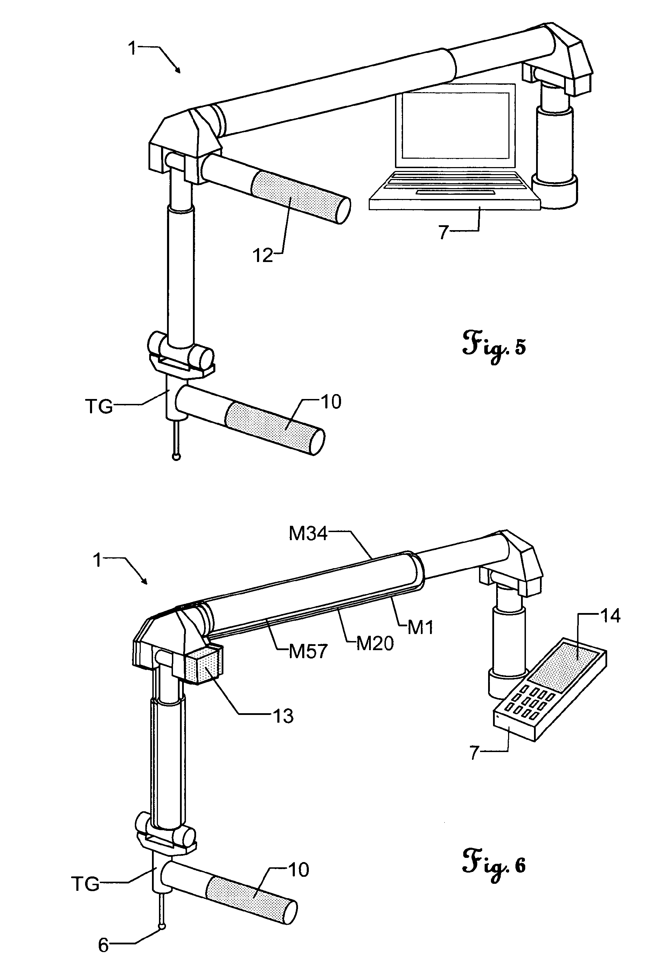

Figur 5 zeigt eine Koordinatenmessmaschine 1 mit einer tragbaren Recheneinheit, z.B. einem Laptop, als Auswerteeinheit 7. An einem der Arm-Glieder der Messmaschine 1 ist ein erster Griff 12 als Dynamisierungs-Komponente angeordnet. Durch die Dynamisierungs-Komponente kann dabei - für einen Benutzer vereinfacht - eine an dieses Arm-Glied angreifende Kraft ausgeübt werden, sodass die Dynamisierungs-Komponente nun zur Auslenkung von Arm-Gliedern aus Ihrer ursprünglichen räumlichen Lage und somit zur aktiven Erzeugung von vielen verschiedenen Messstellungen ausgebildet ist.

Wie bereits in Figur 3 gezeigt, weist auch die in Figur 5 dargestellte Messmaschine 1 am Tast-Glied TG einen Fixier-Griff 10 zum Aufrechterhalten einer Tastposition auf.

Figur 6 zeigt eine Koordinatenmessmaschine mit einer als mechanischer Vibrationserzeuger 13 ausgebildeten Dynamisierungs-Komponente, die beispielhaft an einem der Arm-Glieder angebracht ist. Der insbesondere elektrisch betriebene Vibrator 13 kann vorzugsweise durch die Auswerteeinheit 7 gesteuert werden.

Beispielsweise kann der Vibrationserzeuger 13 in einer Vibrationsintensität variiert werden, sodass die Glieder sowohl geringfügig, beispielsweise im Sub-Zehntausendstelmeterbereich, als auch gröber, z.B. im Milli- oder Zentimeterbereich, aus ihrer ursprünglichen Lage ausgelenkt werden können. Dadurch kann eine grosse Bandbreite von unterschiedlichen Messstellungen (M1,..., M34,...,M20,...,M57,...,Mn) erzeugt werden. Insbesondere können durch gattungsgemässe Vibrationserzeuger 13 den Arm-Gliedern fortlaufende Zitter-, Rüttel- oder Vibrationsbewegungen aufgeprägt werden.

Anhand einer Steuerung des Vibrationserzeugers 13 durch die Auswerteeinheit 7 kann im Speziellen auch ein automatisches Ausschalten des Vibrationserzeugers 13 erfolgen, beispielsweise sobald ein vorgegebener Messzeitraum endet oder sobald eine vorgegebene statistische Mindestgenauigkeit für die Positionsbestimmung erreicht ist. Zusätzlich oder alternativ kann auch ein Mess-Stopp-Signal durch die Auswerteeinheit 7 angezeigt werden. Dabei kann die Auswerteeinheit 7 beispielhaft durch eine kompakte Recheneinheit mit Benutzereingabemöglichkeit und Anzeige 14 - z.B. für das Mess-Stopp-Signal, für die berechneten Mess-Positionen sowie gegebenenfalls für Genauigkeitsschätzungswerte der Mess-Positionsangaben - verkörpert werden.

Wie bereits in den Figuren 3 und 5 gezeigt, weist auch die in Figur 6 dargestellte Messmaschine am Tast-Glied TG einen Fixier-Griff 10 zum Aufrechterhalten einer Tastposition auf.

Alternativ zur Anordnung des einen einzigen Vibrators 13, wie in Figur 6 dargestellt, können auch mehrere Vibratoren, im Speziellen sogar an jedem Arm-Glied jeweils ein oder mehrere Vibratoren - angeordnet werden. Ebenso kann der gezeigte Vibrator 13 auch an einem anderen Arm-Glied - vorteilhaft jedoch nicht am Tast-Glied TG - angebracht sein. Zur Auslenkung von jedem einzelnen Arm-Glied aus dessen jeweiliger ursprünglichen Raumlage zur erfindungsgemässen Erzeugung von unterschiedlichen Messstellungen genügt allerdings im Allgemeinen das Anordnen von wenigen Vibratoren, beispielsweise jeweils eines Vibrators an jedem dritten Arm-Glied.

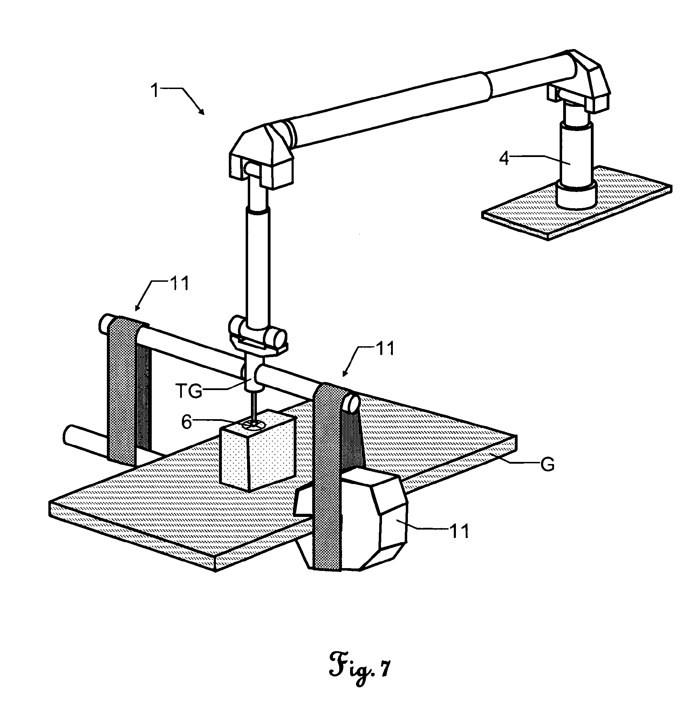

Figur 7 zeigt die Koordinatenmessmaschine 1 mit einer schematisch dargestellten Fixier-Komponente 11 zum Festklemmen - insbesondere anhand eines Klemmmechanismus - des Tast-Glieds TG an einem relativ zur Basis 4 fix positionierten Gegenstand G, sodass der Taster 6 die Tastposition aufrecht erhält. Der in Figur 7 dargestellte Klemmmechanismus ist rein beispielhaft zu betrachten, so können dabei auch jegliche weitere bekannte Mechanismen und Komponenten zum Fixieren des Tast-Glieds TG an einem ortsfesten Gegenstand zur Anwendung kommen.

Wird als Tastelement ein optischer Sensor, z.B. ein Linienscanner oder eine Kamera, verwendet, so können sämtliche im Raum fix positionierte Objekte zum mechanischen Anlegen des Tastelements dienen, sodass während der erfindungsgemässen Messung eine Messposition des Tastelements aufrechterhalten werden kann. Der optische Sensor kann dabei völlig entkoppelt vom Anlegeobjekt fungieren und beispielsweise eine Oberfläche eines Messobjekts abtasten. Gemäss der Erfindung kann nun verbessert und hochpräzise die Position und Ausrichtung des optischen Sensors selbst im Raum bestimmt werden.

Es versteht sich, dass diese dargestellten Figuren nur mögliche Ausführungsbeispiele schematisch darstellen. Die verschiedenen Ansätze können erfindungsgemäss miteinander sowie mit Verfahren bzw. Koordinatenmessmaschinen des Stands der Technik kombiniert werden. Beispielsweise wird in den gezeigten Figuren insbesondere auf als Gelenkarm ausgebildete Koordinatenmessmaschinen eingegangen.

## Patentansprüche

1. Messverfahren zum Bestimmen einer Messposition (PO) eines Tastelements (6) anhand einer Koordinatenmessmaschine (1), wobei die Koordinatenmessmaschine (1) aufweist
• eine Basis (4) und
• mehrere relativ zur Basis (4) und relativ gegeneinander bewegliche Glieder (5a-5g), wobei eines der Glieder (5a-5g) als Tast-Glied (TG) das Tastelement (6) aufweist, sodass das Tastelement (6) innerhalb eines vorgegebenen Raumvolumens frei beweglich ist,
mit den Schritten
• Einnehmen (51) der Messposition (PO) durch das Tastelement (6),
• Erfassen (53) eines Messgrössensatzes (Si) durch Messen von mit einer Messstellung (Mi) der Glieder (5a-5g) verknüpften Messgrössen (αᵢ,βᵢ,γᵢ,δᵢ,εᵢ,aᵢ,bᵢ,cᵢ), wobei die Messstellung (Mi) durch eine relative Lage
□ der Glieder (5a-5g) zueinander sowie
□ mindestens eines der Glieder (5a-5g) zur Basis (4) bestimmt ist, und
• Bestimmen (54) der Messposition (PO) relativ zur Basis (4),
**dadurch gekennzeichnet, dass**
• in einem ortsfixierten Zustand (FIX) des Tastelements (6) in der Messposition (PO) mehrere unterschiedliche Messstellungen (M1,M2,M3,...,Mi,...,Mn) erzeugt (52) werden, wobei für diese das Erfassen (53) jeweils erneut erfolgt, sodass für jede Messstellung (M1,M2,M3,...,Mi,...,Mn) mindestens ein Messgrössensatz (S1,S2,S3,...,Si,...,Sn) aufgenommen wird, und
• das Bestimmen (54) anhand einer statistischen Auswertung der aufgenommenen Messgrössensätze (S1,S2,S3,...,Si,...,Sn) erfolgt.

2. Messverfahren nach Anspruch 1,
**dadurch gekennzeichnet, dass**
als statistische Auswertung eine Ausgleichungsrechnung, insbesondere anhand der Methode der kleinsten Quadrate, für die aufgenommenen Messgrössensätze (S1,S2,S3,...,Si,...,Sn) erfolgt und/oder zur statistischen Auswertung ein optimierendes statistisches Schätzverfahren angewendet wird.

3. Messverfahren nach Anspruch 1 oder 2,
**dadurch gekennzeichnet, dass**
die unterschiedlichen Messstellungen (M1,M2,M3,..., Mi,...,Mn) erzeugt werden durch ein wiederholtes Ändern der relativen Lage von mindestens zwei der Glieder (5a-5g) zueinander und/oder der relativen Lage von mindestens zwei der Glieder (5a-5g) zur Basis (4), insbesondere wobei das wiederholte Ändern durch ein Ausüben einer variierenden Kraft auf mindestens einen Angriffspunkt an einem der Glieder (5a-5g) bewirkt wird, im Speziellen händisch durch einen Benutzer.

4. Messverfahren nach einem der Ansprüche 1 bis 3,
**dadurch gekennzeichnet, dass**
als die Messgrössen (αᵢ,βᵢ,γᵢ,δᵢ,εᵢ,aᵢ,bᵢ,cᵢ) jeweils Winkel (αᵢ,βᵢ,γᵢ,δᵢ,εᵢ) und/oder Entfernung (aᵢ,bᵢ,cᵢ)
• der Glieder (5a-5g) zueinander und
• mindestens eines der Glieder (5a-5g) zur Basis (4) gemessen werden.

5. Messverfahren nach einem der Ansprüche 1 bis 4,
**dadurch gekennzeichnet, dass**
zum Ortsfixieren des Tastelements (6) eine relative Lage des Tast-Glieds (TG) im Raum während der Messung aufrechterhalten wird, insbesondere händisch durch einen Benutzer.

6. Messverfahren nach einem der Ansprüche 1 bis 5,
**dadurch gekennzeichnet, dass**
ein Genauigkeitswert für das Bestimmen der Messposition (PO) statistisch abgeleitet wird.

7. Messverfahren nach einem vorangehenden Ansprüche 1 bis 6,
**dadurch gekennzeichnet, dass**
ein Ändern der Messstellungen (M1,M2,M3,...,Mi,...,Mn) und das Erfassen von Messgrössensätze (S1,S2,S3,...,Si,...,Sn) innerhalb eines Mess-Zeitraumes fortlaufend erfolgen, insbesondere wobei das Erfassen mit einer bestimmten Frequenz erfolgt und insbesondere wobei das Ändern der Messstellungen (M1,M2,M3,...,Mi,...,Mn) durch ein Erzeugen von fortlaufenden Bewegungen mehrerer der Glieder (5a-5g) erfolgt, vorzugsweise mit vielen Bewegungsumkehrungen, im Speziellen wobei der Mess-Zeitraum derart gewählt wird, dass eine vorgegebene statistische Mindestgenauigkeit für das Bestimmen der Messposition (PO) erreicht wird, insbesondere wobei am Ende des Mess-Zeitraums ein Mess-Stop-Signal optisch, akustisch und/oder taktil angezeigt wird.

8. Messverfahren nach einem der Ansprüche 1 bis 7,
**dadurch gekennzeichnet, dass**
eine bestimmte Anzahl an unterschiedlichen Messstellungen (M1,M2,M3,...,Mi,...,Mn) erzeugt wird, insbesondere wobei die Anzahl so gewählt wird, dass eine vorgegebene statistische Mindestgenauigkeit für das Bestimmen der Messposition (PO) erreicht wird, im Speziellen wobei nach Erreichen der bestimmten Anzahl an unterschiedlichen Messstellungen (M1,M2,M3,...,Mi,...,Mn) ein Mess-Stop-Signal optisch, akustisch und/oder taktil angezeigt wird.

9. Messverfahren nach einem der Ansprüche 1 bis 8,
**dadurch gekennzeichnet, dass**
das Tastelement (6) zum taktilen Kontaktieren eines Messpunktes (MP) einer Messobjektoberfläche ausgebildet ist, wodurch die Messposition (PO) eingenommen wird, insbesondere wobei das Ortsfixieren des Tastelements (6) durch ein Aufrechterhalten eines taktilen Kontakts zwischen dem Tastelement (6) und dem Messpunkt (MP) erfolgt.

10. Messverfahren nach einem der Ansprüche 1 bis 8,
**dadurch gekennzeichnet, dass**
• das Tastelement (6) zum optischen Anmessen eines Messpunktes (MP) einer Messobjektoberfläche ausgebildet ist oder
• das Tastelement (6) zum optischen Abtasten oder Erfassen einer Messobjektoberfläche ausgebildet ist.

11. Koordinatenmessmaschine (1) zur Bestimmung einer Messposition (PO) eines Tastelements (6) mit
• einer Basis (4),
• mehreren relativ zur Basis (4) und relativ gegeneinander beweglichen Gliedern (5a-5g), wobei eines der Glieder (5a-5g) als Tast-Glied (TG) das Tastelement (6) aufweist, sodass das Tastelement (6) innerhalb eines vorgegebenen Raumvolumens bewegbar ist,
• mehreren Lagemesseinrichtungen (8a-8f) zum Messen von Messgrössen (αᵢ,βᵢ,γᵢ,δᵢ,εᵢ,aᵢ,bᵢ,cᵢ), die von einer Messstellung (Mi) der Glieder (5a-5g) abhängen, wobei die Messstellung (Mi) durch eine relative Lage
□ der Glieder (5a-5g) zueinander sowie
□ mindestens eines der Glieder (5a-5g) zur Basis (4) gegeben ist, und
• einer Auswerteeinheit (7) zur Bestimmung der Messposition (PO),
**dadurch gekennzeichnet, dass**
die Auswerteeinheit (7) ausgebildet ist
• zur - im Rahmen einer Positionsbestimmung erfolgenden - fortlaufenden, insbesondere automatischen, Erfassung von mehreren Messgrössensätzen (S1,S2,S3,...,Si,...,Sn) für unterschiedliche Messstellungen (M1,M2,M3,...,Mi,...,Mn) in der einen einzigen, festgehaltenen Messposition (PO) des Tastelements (6) und
• zur Ableitung der Messposition (PO) des Messpunktes (MP) anhand einer statistischen Auswertung der aufgenommenen Messgrössensätze (S1,S2,S3,...,Si,...,Sn).

12. Koordinatenmessmaschine (1) nach Anspruch 11,
**dadurch gekennzeichnet, dass**
die Auswerteeinheit (7) zur Durchführung der Schritte
□ erneutes Erfassen (53) eines Messgrössensatzes (S1,S2,S3,...,Si,...,Sn) jeweils für die unterschiedlichen Messstellungen (M1,M2,M3,...,Mi,...,Mn) und
□ Bestimmen (54) der Messposition (PO) anhand einer statistischen Auswertung der aufgenommenen Messgrössensätze (S1,S2,S3,...,Si,...,Sn)
des Verfahrens nach einem der Ansprüche 1 bis 10 ausgebildet ist.

13. Koordinatenmessmaschine (1) nach Anspruch 11 oder 12,
**gekennzeichnet durch**
einen Griff oder eine Vibrationserzeugungseinheit als Dynamisierungs-Komponente (12,13) zur aktiven Erzeugung der mehreren unterschiedlichen Messstellungen (M1,M2,M3,...,Mi,...,Mn), sodass mittels der Dynamisierungs-Komponente (12,13) eine an mindestens einem der Glieder (5a-5g) angreifende, insbesondere variierende Kraft ausübbar ist.

14. Koordinatenmessmaschine (1) nach Anspruch 13,
**dadurch gekennzeichnet, dass**
die Dynamisierungs-Komponente (12,13) als elektrisch betriebene Antriebseinheit ausgebildet ist und im Speziellen automatisch ausgeschaltet wird, sobald eine vorgegebene statistische Mindestgenauigkeit für die Positionsbestimmung erreicht ist.

15. Koordinatenmessmaschine (1) nach einem der Ansprüche 11 bis 14,
**dadurch gekennzeichnet, dass**
als die Lagemesseinrichtungen (8a-8f)
• Winkelmesser (8a,8c,8d) und/oder
• Längenmesser (8b,8e)
vorhanden sind, insbesondere wobei die Koordinatenmessmaschine (1) als Gelenkarm ausgebildet ist mit mindestens drei Arm-Gliedern als Glieder (5a-5g), die teilweise über relative Drehbewegungen ermöglichende Gelenke und teilweise über relative Linearbewegungen ermöglichende Aufhängungen miteinander verbunden sind.

16. Koordinatenmessmaschine (1) nach einem der Ansprüche 11 bis 15,
**dadurch gekennzeichnet, dass**
die Lagemesseinrichtungen (8a-8f) und die Auswerteeinheit (7) als zentrale Auswerteeinheit derart zur Kommunikation miteinander über Kabel oder kabellos, insbesondere per Funk oder optisch, ausgebildet sind, sodass
• die jeweils durch die Lagemesseinrichtungen (8a-8f) gemessenen Messgrössen (αᵢ,βᵢ,γᵢ,δᵢ,εᵢ,aᵢ,bᵢ,cᵢ) an die zentrale Auswerteeinheit sowie
• durch die zentrale Auswerteeinheit Signale zur Synchronisierung von Messgrössenaufnahme und Messgrössenverarbeitung an die jeweiligen Lagemesseinrichtungen (8a-8f)
übermittelt werden.

17. Koordinatenmessmaschine (1) nach einem der Ansprüche 11 bis 15,
**dadurch gekennzeichnet, dass**
die Auswerteeinheit (7) aufweist:
• dezentrale Auswerte-Teileinheiten, die jeweils
□ den Lagemesseinrichtungen (8a-8f) zugeordnet sind, und
□ zur - im Rahmen einer Positionsbestimmung erfolgenden - fortlaufenden, insbesondere automatischen Erfassung von einer Vielzahl der jeweiligen Messgrössen (αᵢ,βᵢ,γᵢ,δᵢ,εᵢ,aᵢ,bᵢ,cᵢ) fürdie unterschiedliche Messstellungen (M1,M2,M3,...,Mi,...,Mn) sowie
□ zur statistischen Auswertung der jeweiligen Messgrössen (αᵢ,βᵢ,γᵢ,δᵢ,εᵢ,aᵢ,bᵢ,cᵢ) ausgebildet sind,
und
• eine zentrale Auswertekomponente zur Ableitung der Messposition (PO) anhand der statistischen Auswertungen der jeweiligen Auswerte-Teileinheiten.

18. Computerprogrammprodukt mit Programmcode, der auf einem maschinenlesbaren Träger gespeichert ist, zur Durchführung der Schritte
• erneutes Erfassen (53) eines Messgrössensatzes (S1,S2,S3,...,Si,...,Sn) jeweils für unterschiedliche Messstellungen (M1,M2,M3,...,Mi,...,Mn) und
• Bestimmen (54) der Messposition (PO) des Tastelements (6) anhand einer statistischen Auswertung der aufgenommenen Messgrössensätze (S1,S2,S3,...,Si,...,Sn) des Verfahrens nach einem der Ansprüche 1 bis 10, insbesondere wenn das Programm in einer Auswerteeinheit (7) ausgeführt wird.

## Claims

1. Measuring method for determining a measuring position (PO) of a probe element (6) with the aid of a coordinate measuring machine (1), coordinate measuring machine (1) having
• a base (4), and
• a plurality of members (5a-5g) that can be moved relative to the base (4) and relative to one another, one of the members (5a-5g) having, as probe member (TG), the probe element (6), such that the probe element (6) can be moved freely within a prescribed space volume,
having the steps of
• adoption (51) of the measuring position (PO) by the probe element (6),
• acquisition (53) of a set (Si) of measured variables by measuring measured variables (αᵢ, βᵢ, γᵢ, δᵢ, εᵢ, aᵢ, bᵢ, cᵢ) linked to a measurement setting (Mi) of the members (5a-5g), the measurement setting (Mi) being determined by a relative position
□ of the members (5a-5g) to one another, and
□ at least one of the members (5a-5g) relative to the base (4), and
• determination (54) of the measuring position (PO) relative to the base (4),
**characterized in that**
• in a spatially fixed state (FIX) of the probe element (6) in the measuring position (PO) a plurality of different measurement settings (M1, M2, M3, ..., Mi, ..., Mn) are generated (52), the acquisition (53) respectively being performed anew for these such that at least one set (S1, S2, S3, ..., Si, ..., Sn) of measured variables is recorded for each measurement setting (M1, M2, M3, ..., Mi, ..., Mn), and
• the determination (54) is performed with the aid of a statistical evaluation of the recorded sets (S1, S2, S3, ..., Si, ..., Sn) of measured variables.

2. Measuring method according to Claim 1, **characterized in that**
a compensation calculation is performed as statistical evaluation for the recorded sets (S1, S2, S3, ..., Si, ..., Sn) of measured variables, in particular with the aid of the method of least squares, and/or an optimized statistical estimation method is applied for the statistical evaluation.

3. Measuring method according to Claim 1 or 2, **characterized in that**
the different measurement settings (M1, M2, M3, ..., Mi, ..., Mn) are generated by a repeated changing of the relative position of at least two of the members (5a-5g) relative to one another and/or of the relative position of at least two of the members (5a-5g) relative to the base (4), in particular the repeated changing being effected by an exertion of a variant force on at least one point of action on one of the members (5a-5g), specifically manually via a user.

4. Measuring method according to one of Claims 1 to 3,
**characterized in that**
an angle (αᵢ, βᵢ, γᵢ, δᵢ, εᵢ) and/or a distance (aᵢ, bᵢ, cᵢ)
• of the members (5a-5g) to/from one another, and
• of at least one of the members (5a-5g) relative to the base (4)
are respectively measured as the measured variables (αᵢ, βᵢ, γᵢ, δᵢ, εᵢ, aᵢ, bi, cᵢ).

5. Measuring method according to one of Claims 1 to 4,
**characterized in that**
in order to fix the probe element (6) spatially a relative position of the probe member (TG) in space is maintained during the measurement, in particular manually by a user.

6. Measuring method according to one of Claims 1 to 5,
**characterized in that**
an accuracy value for the determination of the measuring position (PO) is derived statistically.

7. Measuring method according to one of the preceding Claims 1 to 6,
**characterized in that**
a changing of the measurement settings (M1, M2, M3, ..., Mi, ..., Mn) and the acquisition of the sets (S1, S2, S3, ..., Si, ..., Sn) of measured variables are performed continuously within a measurement period, in particular the acquisition being performed with a specific frequency, and in particular the changing of the measurement settings (M1, M2, M3, ..., Mi, ..., Mn) being performed by producing continuous movements of a plurality of the members (5a-5g), preferably with many movement reversals, the measurement period particularly being selected in such a way that a prescribed statistical minimum accuracy for the determination of the measuring position (PO) is achieved, in particular a measurement stop signal being indicated at the end of the measurement period in an optical, acoustic and/or tactile fashion.

8. Measuring method according to one of Claims 1 to 7,
**characterized in that**
a specific number of different measurement settings (M1, M2, M3, ..., Mi, ..., Mn) are generated, in particular the number being selected such that a prescribed statistical minimum accuracy for the determination of the measuring position (PO) is achieved, particularly a measurement stop signal being indicated in an optical, acoustic and/or tactile fashion after achievement of the specific number of different measurement settings (M1, M2, M3, ..., Mi, ..., Mn).

9. Measuring method according to one of Claims 1 to 8,
**characterized in that**
the probe element (8) is designed for making tactile contact with a measuring point (MP) of a measurement object surface, as a result of which the measuring position (PO) is adopted, in particular the spatial fixing of the probe element (6) being performed by maintaining a tactile contact between the probe element (60 and the measuring point (MP).

10. Measuring method according to one of Claims 1 to 8,
**characterized in that**
• the probe element (6) is designed for optically measuring a measuring point (MP) of a measurement object surface, or
• the probe element (6) is designed for optically scanning or acquiring a measurement object surface.

11. Coordinate measuring machine (1) for determining a measuring position (PO) of a probe element (6), having
• a base (4),
• a plurality of members (5a-5g) that can be moved relative to the base (4) and relative to one another, one of the members (5a-5g) having the probe element (6) as probe member (TG) such that the probe element (6) can be moved within a prescribed space volume,
• a plurality of position measuring devices (8a-8f) for measuring measured variables (αᵢ, βᵢ, γᵢ, δᵢ, εᵢ, aᵢ, bᵢ, cᵢ) that depend on a measurement setting (Mi) of the members (5a-5g), the measurement setting (Mi) being given by a relative position
□ of the members (5a-5g) to one another, and
□ at least one of the members (5a-5g) being given relative to the base (4), and
• an evaluation unit (7) for determining the measuring position (PO),
**characterized in that**
the evaluation unit (7) is designed
• for continuously, in particular automatically, acquiring - in the course of a determination of position - a plurality of sets (S1, S2, S3, ..., Si, ..., Sn) of measured variables for different measurement settings (M1, M2, M3, ..., Mi, ..., Mn) at a sole, fixed measuring position (PO) of the probe element (6), and
• for deriving the measuring position (PO) of the measuring point (MP) with the aid of a statistical evaluation of the recorded sets (S1, S2, S3, ..., Si, ..., Sn) of measured variables.

12. Coordinate measuring machine (1) according to Claim 11,
**characterized in that**
the evaluation unit (7) is designed for carrying out the steps of
□ renewed acquisition (53) of a set (S1, S2, S3, ..., Si, ..., Sn) of measured variables, in each case for the different measurement settings (M1, M2, M3, ..., Mi, ..., Mn), and
□ determination (54) of the measuring position (PO), with the aid of a statistical evaluation of the recorded sets (S1, S2, S3, ..., Si, ..., Sn) of measured variables
of the method according to one of Claims 1 to 10.

13. Coordinate measuring machine (1) according to Claim 11 or 12,
**characterized by**
a handle or a vibration generator unit as dynamization component (12, 13) for actively generating the plurality of different measurement settings (M1, M2, M3, ..., Mi, ..., Mn) such that an, in particular, varying force that acts on at least one of the members (5a-5g) can be exerted by means of the dynamization component (12, 13).

14. Coordinate measuring machine (1) according to Claim 13,
**characterized in that**
the dynamization component (12, 13) is designed as an electrically operated drive unit and is, particularly, switched off automatically as soon as a prescribed statistical minimum accuracy for the determination of position is achieved.

15. Coordinate measuring machine (1) according to one of Claims 11 to 14,
**characterized in that**
• goniometers (8a, 8c, 8d) and/or
• length gages (8b, 8e)
are present as the position measuring devices (8a-8f), in particular coordinate measuring machine (1) being designed as an articulated arm with at least three arm members as members (5a-5g) that are interconnected partially via articulations enabling relative rotary movements, and partially via suspensions enabling relative linear movements.

16. Coordinate measuring machine (1) according to one of Claims 11 to 15,
**characterized in that**
the position measuring devices (8a-8f) and the evaluation unit (7) as central evaluation unit are designed in such a way for communication with one another via cable or without cable, in particular by radio or optically, such that
• the measured variables (αᵢ, βᵢ, γᵢ, δᵢ, εᵢ, aᵢ, bᵢ, cᵢ) respectively measured by the position measuring devices (8a-8f) are transmitted to the central evaluation unit, and
• signals for synchronizing the recording of measured variables and the processing of measured variables are transmitted to the respective position measuring devices (8a-8f) by the central evaluation unit.

17. Coordinate measuring machine (1) according to one of Claims 11 to 15,
**characterized in that**
the evaluation unit (7) has:
• decentral evaluation subunits that in each case
□ are assigned to the position measuring devices (8a-8f) and
□ are designed for continuously, in particular automatically - in the course of a determination of position - acquiring a multiplicity of the respective measured variables (αᵢ, βᵢ, γᵢ, δᵢ, εᵢ, aᵢ, bᵢ, cᵢ) for the different measurement settings (M1, M2, M3, ..., Mi, ..., Mn), and
□ for statistically evaluating the respective measured variables (αᵢ, βᵢ, γᵢ, δᵢ, εᵢ, aᵢ, bᵢ, cᵢ),
and
• a central evaluation component for deriving the measuring position (PO) with the aid of the statistical evaluations of the respective evaluation subunits.

18. Computer program product with program code, which is stored on a machine readable medium, for carrying out the steps of
• renewed acquisition (53) of a set (S1, S2, S3, ..., Si, ..., Sn) of measured variables for the different measurement settings (M1, M2, M3, ..., Mi, ..., Mn) in each case
and
• determination (54) of the measuring position (PO) of the probe element (6) with the aid of a statistical evaluation of the recorded sets (S1, S2, S3, ..., Si, ..., Sn) of measured variables
of the method according to one of Claims 1 to 10, in particular when the program is executed in an evaluation unit (7).

## Revendications

1. Procédé de mesure pour déterminer une position de mesure (PO) d'un élément palpeur (6) à l'aide d'une machine de mesure de coordonnées (1), la machine de mesure de coordonnées (1) présentant :
• une base (4), et
• une pluralité d'organes (5a à 5g) mobiles par rapport à la base (4) et les uns par rapport aux autres, l'un des organes (5a à 5g) faisant office d'organe palpeur (TG) présentant l'élément palpeur (6), de manière que l'élément palpeur (6) soit mobile librement à l'intérieur d'un volume spatial prédéterminé,
avec les étapes consistant à :
• faire prendre (51) la position de mesure (PO) par l'élément palpeur (6),
• détecter (53) un jeu de grandeurs de mesure (Si), par mesure de grandeurs de mesure (αᵢ, βᵢ, γᵢ, δᵢ, εᵢ, aᵢ, bᵢ, cᵢ) combinées à une position de mesure (Mi) des organes (5a à 5g), la position de mesure (Mi) étant déterminée au moyen d'une position relative
o des organes (5a à 5g) les uns par rapport aux autres, ainsi que
o d'au moins l'un des organes (5a à 5g) par rapport à la base (4), et
• détermination (54) de la position de mesure (PO) par rapport à la base (4),
**caractérisé en ce que**,
• en un état fixé localement (FIX) de l'élément palpeur (6) dans la position de mesure (PO), plusieurs positions de mesure (M1, M2, M3, ..., Mi, ..., Mn) différentes sont générées (52), pour lesquelles la détection est effectuée chaque fois de nouveau, de manière que, pour chaque position de mesure (M1, M2, M3, ..., Mi, ..., Mn), au moins un jeu de grandeurs de mesure (S1, S2, S3, ..., Si, ..., Sn) soit enregistré, et
• la détermination (54) est effectuée à l'aide d'une évaluation statistique des jeux de grandeurs de mesure (S1, S2, S3, ..., Si, ..., Sn) enregistrés.

2. Procédé de mesure selon la revendication 1,
**caractérisé en ce qu'**
est effectué en tant qu'évaluation statistique, pour les jeux de grandeurs de mesure (S1, S2, S3, ..., Si, ..., Sn) enregistrés, un calcul d'ajustement de données, en particulier à l'aide de la méthode des moindres carrés et/ou un procédé d'estimation statistique optimisant est appliqué pour l'évaluation statistique.

3. Procédé de mesure selon la revendication 1 ou 2,
**caractérisé en ce que**
les différentes positions de mesure (M1, M2,M3, ..., Mi, ..., Mn) sont générées par une modification répétée de la position relative d'au moins deux des organes (5a à 5g) l'un par rapport à l'autre et/ou de la position relative d'au moins deux des organes (5a à 5g) par rapport à la base (4), en particulier la modification répétée étant provoquée en exerçant une force variable sur au moins un point d'attaque sur l'un des organes (5a à 5g), spécialement en procédant manuellement, par un utilisateur.

4. Procédé de mesure selon l'une des revendications 1 à 3,
**caractérisé en ce que**
sont chaque fois mesurées, en tant que les grandeurs de mesure (αᵢ, βᵢ, γᵢ, δᵢ, εᵢ, aᵢ, bᵢ, cᵢ), des angles (aᵢ, βᵢ, γᵢ, δᵢ, εᵢ) et/ou un éloignement (aᵢ, bᵢ, cᵢ)
• des organes (5a à 5g) les uns par rapport aux autres, et
• au moins l'un des organes (5a à 5g) par rapport à la base (4).

5. Procédé de mesure selon l'une des revendications 1 à 4,
**caractérisé en ce que**,
pour la fixation de l'élément palpeur (6), une position relative de l'organe palpeur (TG) dans l'espace est conservée, en particulier manuellement, par un utilisateur, pendant la mesure.

6. Procédé de mesure selon l'une des revendications 1 à 5,
**caractérisé en ce qu'**
une valeur de précision est dérivée statistiquement pour la détermination de la position de mesure (PO).

7. Procédé de mesure selon l'une des revendications 1 à 6 précédentes,
**caractérisé en ce qu'**
une modification des positions de mesure (M1, M2, M3, ..., Mi, ..., Mn) et la détection de jeux de grandeurs de mesure (S1, S2, S3, ..., Si, ..., Sn) sont effectuées de manière continue dans les limites d'une période de temps de mesure, en particulier la détection est effectuée à une fréquence déterminée et, en particulier, la modification des positions de mesure (M1, M2, M3, ..., Mi, ..., Mn) est effectuée en générant des déplacements continus de plusieurs des organes (5a à 5g), de préférence avec de nombreuses inversions de mouvement, spécialement la période de temps de mesure étant choisie de manière qu'une précision minimale statistique prédéterminée pour la détermination de la position de mesure (PO) soit atteinte, en particulier à la fin de la période de temps de mesure un signal d'arrêt des mesures étant affiché optiquement, acoustiquement et/ou tactilement.

8. Procédé de mesure selon l'une des revendications 1 à 7,
**caractérisé en ce qu'**
un nombre déterminé de positions de mesure (M1, M2, M3, ..., Mi, ..., Mn) différentes est généré, en particulier le nombre étant choisi tel qu'une précision minimale statistique prédéterminée pour la détermination de la position de mesure (PO) soit atteinte, spécialement, après atteinte du nombre déterminé de positions de mesure (M1, M2, M3, ..., Mi, ..., Mn) différentes, un signal d'arrêt des mesures étant affiché optiquement, acoustiquement et/ou tactilement.

9. Procédé de mesure selon l'une des revendications 1 à 8,
**caractérisé en ce que**
l'élément palpeur (6) est réalisé pour établir le contact tactile d'un point de mesure (MP) d'une surface d'objet à mesurer, faisant que la position de mesure (PO) est prise, en particulier la fixation locale de l'élément palpeur (6) est effectuée par le biais d'une conservation d'un contact tactile entre l'élément palpeur (6) et le point de mesure (MP).

10. Procédé de mesure selon l'une des revendications 1 à 8,
**caractérisé en ce que**
• l'élément palpeur (6) est réalisé pour la mesure optique d'un point de mesure (MP) d'une surface d'objet à mesurer, ou
• l'élément palpeur (6) est réalisé pour l'exploration optique ou la détection d'une surface d'objet à mesurer.

11. Machine de mesure de coordonnées (1) pour la détermination d'une position de mesure (PO) d'un élément palpeur (6), avec
• une base (4),
• une pluralité d'organes (5a à 5g) mobiles par rapport à la base (4) et les uns par rapport aux autres, l'un des organes (5a à 5g) faisant office d'organe palpeur (TG) présentant l'élément palpeur (6), de manière que l'élément palpeur (6) soit mobile à l'intérieur d'un volume spatial prédéterminé,
• une pluralité de dispositifs de mesure de position (8a à 8f), pour mesurer des grandeurs de mesure (αᵢ, βᵢ, γᵢ, δᵢ, εᵢ, aᵢ, bᵢ, cᵢ) dépendant d'une position de mesure (Mi) des organes (5a à 5g), la position de mesure (Mi) étant fournie au moyen d'une position relative
o des organes (5a à 5g) les uns par rapport aux autres, ainsi que
o d'au moins l'un des organes (5a à 5g) par rapport à la base (4), et
• une unité d'évaluation (7) pour la détermination de la position de mesure (PO),
**caractérisé en ce que**
l'unité d'évaluation (7) est réalisée
• pour accomplir une détection, en particulier automatique, continue - s'effectuant dans le cadre d'une détermination de position - de plusieurs jeux de grandeurs de mesure (S1, S2, S3, ..., Si, ..., Sn) pour différentes positions de mesure (M1, M2, M3, ..., Mi, ..., Mn), dans une position de mesure (PO) fixée, unique, de l'élément palpeur (6), et
• pour accomplir une dérivation de la position de mesure (PO) du point de mesure (MP) à l'aide d'une évaluation statistique des jeux de grandeurs de mesure (S1, S2, S3, ..., Si, ..., Sn) enregistrés.

12. Machine de mesure de coordonnées (1) selon la revendication 11,
**caractérisée en ce que**
l'unité d'évaluation (7) est réalisée pour accomplir les étapes de
o détection (53) renouvelée d'un jeu de grandeurs de mesure (S1, S2, S3, ..., Si, ..., Sn), chaque fois pour les différentes positions de mesure (M1, M2, M3, ..., Mi, ..., Mn), et
o détermination (54) de la position de mesure (PO) à l'aide d'une évaluation statistique des jeux de grandeurs de mesure (S1, S2, S3, ..., Si, ..., Sn) enregistrés
du procédé de mesure selon l'une des revendications 1 à 10.

13. Machine de mesure de coordonnées (1) selon la revendication 11 ou 12,
**caractérisée par**
une poignée ou une unité de génération de vibrations, en tant que composant de dynamisation (12, 13) pour la génération active de la pluralité de positions de mesure (M1, M2, M3, ..., Mi, ..., Mn) différentes, de manière que, au moyen du composant de dynamisation (12, 13), une force, en particulier variable, agissant sur au moins l'un des organes (5a à 5g), puisse être exercée.

14. Machine de mesure de coordonnées (1) selon la revendication 13,
**caractérisée en ce que**
le composant de dynamisation (12, 13) est réalisé sous forme d'unité d'entraînement, fonctionnant électriquement, et spécialement est mis hors service automatiquement, dès qu'une précision minimale statistique prédéterminée est atteinte pour la détermination de position.

15. Machine de mesure de coordonnées (1) selon l'une des revendications 11 à 14,
**caractérisée en ce que**
sont prévus comme dispositifs de mesure de position (8a à 8f),
• des capteurs d'angle (8a, 8c, 8d) et/ou
• des capteurs de mesure de longueur (8b, 8e),
en particulier la machine de mesure de coordonnées (1) étant réalisée sous forme de bras articulé, avec au moins trois organes formant bras faisant office d'organes (5a à 5g), reliés ensemble partiellement par des articulations, permettant des mouvements de rotation relatifs, et partiellement par des suspensions, permettant des déplacements linéaires relatifs.

16. Machine de mesure de coordonnées (1) selon l'une des revendications 11 à 15,
**caractérisée en ce que**
les dispositifs de mesure de position (8a à 8f) et l'unité d'évaluation (7) sont réalisés sous forme d'unité d'évaluation centrale, de manière que, pour la communication entre eux, par câbles ou sans câble, en particulier par radio ou optiquement,
• les grandeurs de mesure (αᵢ, βᵢ, γᵢ, δᵢ, εᵢ, aᵢ, bᵢ, cᵢ), chaque fois mesurées par les dispositifs de mesure de position (8a à 8f), soient transmises à l'unité d'évaluation centrale, et
• des signaux pour la synchronisation de l'enregistrement de grandeurs de mesure et le traitement de grandeurs de mesure soient transmis, au moyen de l'unité d'évaluation centrale, au dispositifs de mesure de position (8a à 8f) respectifs.

17. Machine de mesure de coordonnées (1) selon l'une des revendications 11 à 15,
**caractérisée en ce que**
l'unité d'évaluation (7) présente :
• des unités partielles d'évaluation décentralisées, chaque fois
o associées aux dispositifs de mesure de position (8a à 8f), et sont réalisées
o pour la détection, en particulier automatique, continue - s'effectuant dans le cadre d'une détermination de position - d'une pluralité de grandeurs de mesure (αᵢ, βᵢ, γᵢ, δᵢ, εᵢ, aᵢ, bᵢ, cᵢ) respectives pour les différentes positions de mesure (M1, M2, M3, ..., Mi, ..., Mn), ainsi que
o pour l'évaluation statistique des grandeurs de mesure (αᵢ, βᵢ, γᵢ, δᵢ, εᵢ, aᵢ, bᵢ, cᵢ) respectives,
et
• un composant d'évaluation central, pour la dérivation de la position de mesure (PO) à l'aide des évaluations statistiques des unités partielles d'évaluation respectives.

18. Produit-programme informatique, avec un code de programme, stocké sur un support lisible par une machine, pour l'accomplissement des étapes de :
• nouvelle détection (53) d'un jeu de grandeurs de mesure (S1, S2, S3, ..., Si, ..., Sn), chaque fois pour des positions de mesure (M1, M2,M3, ..., Mi, ..., Mn) différentes, et
• détermination (54) de la position de mesure(PO) de l'élément palpeur (6) à l'aide d'une évaluation statistique des jeux de grandeurs de mesure (S1, S2, S3, ..., Si, ..., Sn) enregistrés
du procédé selon l'une des revendications 1 à 10, en particulier lorsque le programme est exécuté dans une unité d'évaluation (7).
